(19) Europäisches Patentamt
European Patent Office
Office européen des brevets

(11) Veröffentlichungsnummer: **0 350 716 B1**

(12) **EUROPÄISCHE PATENTSCHRIFT**

(45) Veröffentlichungstag der Patentschrift: **01.12.93**

(51) Int. Cl.$^5$: **H02P 5/40**, H02P 7/63

(21) Anmeldenummer: **89111765.7**

(22) Anmeldetag: **28.06.89**

(54) **Verfahren zur Verringerung eines Stromeinbruches in einem nicht an der Kommutierung beteiligten Strang einer dreiphasigen, blockstromgespeisten Synchronmaschine und Schaltungsanordnung zur Durchführung des Verfahrens.**

(30) Priorität: **11.07.88 DE 3823499**

(43) Veröffentlichungstag der Anmeldung:
**17.01.90 Patentblatt 90/03**

(45) Bekanntmachung des Hinweises auf die
Patenterteilung:
**01.12.93 Patentblatt 93/48**

(84) Benannte Vertragsstaaten:
**AT CH DE FR GB IT LI**

(56) Entgegenhaltungen:
**EP-A- 0 208 847**
**EP-A- 0 261 540**
**EP-A- 0 313 929**
**DE-A- 2 915 987**

(73) Patentinhaber: **SIEMENS AKTIENGESELL-
SCHAFT**
**Wittelsbacherplatz 2**
**D-80333 München(DE)**

(72) Erfinder: **Hamann, Jens, Dr.**
**Steinacher Strasse 22a**
**D-8510 Fürth-Stadeln(DE)**
Erfinder: **Vogt, Hartmut, Dipl.-Ing.**
**Anna-Hermann-Strasse 34**
**D-8522 Herzogenaurach(DE)**

**Beschreibung**

Verfahren Zur Verringerung eines Stromeinbruches in einem nicht an der Kommutierung beteiligten Strang einer dreiphasigen, blockstromgespeisten Synchronmaschine und Schaltungsanordnung zur Durchführung des Verfahrens

Die Erfindung bezieht sich auf ein Verfahren zur Verringerung eines Stromeinbruches in einem nicht an der Kommutierung beteiligten Strang einer dreiphasigen, blockstromgespeisten Synchronmaschine, während die Strangströme der beiden anderen Stränge kommutieren und eine Schaltungsanordnung zur Durchführung des Verfahrens.

Synchronmaschinen mit trapezförmiger elektromotorischer Kraft (EMK) erzeugen bei Speisung mit blockförmigen Strömen ein konstantes Moment. Deshalb werden derartige Maschinen bei Drehstromvorschub-Antrieben eingesetzt. Die blockförmigen Ströme werden mittels eines Stromrichters erzeugt, wobei mit Hilfe eines Steuersatzes und einer Steuerspannung ein umlaufendes Feld in der Maschine erzeugt wird. Außerdem ist das Moment proportional zum Maschinenstrom. Es wurde festgestellt, daß Drehmomenteinbrüche durch Stromeinbrüche in einem nicht an der Kommutierung beteiligten Strang während der Kommutierung der beiden anderen Strangströme der dreiphasigen, blockstromgespeisten Synchronmaschine verursacht werden, die sich besonders bei niedrigen Drehzahlen bemerkbar machen.

Ein Verfahren der eingangs genannten Art ist im Dokument EP-A-0 313 929 vorgeschlagen worden. Dabei soll die Drehmomentwelligkeit verringert werden, indem der Stromeinbruch in einem nicht an der Kommutierung beteiligten Strang einer Synchronmaschine vermindert wird. Die Lösung besteht bei dieser technischen Lehre darin, in der Regeleinrichtung die Steuerspannung während der Kommutierung zu erhöhen, um möglichst gleiche Stromänderungen in den kommutierenden Strängen zu bekommen.

Ferner sei noch auf die EP-A-0 261 540 verwiesen, aus der es bekannt ist, für eine weitgehend gleiche technische Aufgabe dem Steuersatz während der Kommutierung einen größeren Stromsollwert aufzuschalten.

Auch der Erfindung liegt die Aufgabe zugrunde, ein Verfahren zur Verringerung eines Stromeinbruches in einem jeweils nicht an der Kommutierung beteiligten Strang einer dreiphasigen, blockstromgespeisten Synchronmaschine und eine Schaltungsanordnung zur Durchführung des Verfahrens anzugeben, wobei die Drehmomentwelligkeit einer blockstromgespeisten Synchronmaschine erheblich verringert werden soll.

Diese Aufgabe wird durch den Anspruch 1 gelöst.

Da zur Kommutierung am auf- bzw. abkommutierenden Strang unterschiedliche Spannungswerte anstehen, beispielsweise Null Volt, 1/3 des Zwischenkreisspannungswertes, 2/3 des Zwischenkreisspannungswertes oder die elektromotorische Kraft EMK, kommutieren die Ströme in den an der Kommutierung beteiligten Stränge nicht gleichmäßig auf bzw. ab. Während der Strom im abkommutierenden Strang bereits Null ist, hat der aufkommutierende Strom zu diesem Zeitpunkt beispielsweise erst 50 % seines Sollwertes erreicht. Das hat zur Folge, daß jeweils der Strom im an der Kommutierung nicht beteiligten Strang unterschiedlich einbricht, wodurch der Gesamtstrom und damit der Drehmomentenverlauf wellig wird. Da die Kommutierung von der treibenden Spannung an den Strängen abhängt und diese vom Pulsmuster, das der Steuersatz dem Stromrichter zuführt, wird durch das Kurzschließen der dreieckförmigen, hochfrequenten Abtastspannung für eine vorbestimmte Synchronisierzeit jeweils zum Kommutierungsbeginn erreicht, daß die hochfrequente Abtastspannung jeweils zum Kommutierungsbeginn mit Null Volt beginnt, wodurch zu Beginn jeder Kommutierung dasselbe Pulsmuster vom Steuersatz des die Synchronmaschine speisenden Stromrichters erzeugt wird. Dadurch wird erreicht, daß die Stromeinbrüche jeweils in dem an der Kommutierung nicht beteiligten Strang alle gleich sind und sich verringert haben.

Die vorbestimmte Synchronisierzeit richtet sich nach der Ladungsmenge des Kondensators des Integrators des Pulsfrequenzgenerators, da innerhalb dieser vorbestimmten Synchronisierzeit der Kondensator sich entladen muß, wodurch die dreieckförmige, hochfrequente Abtastspannung jedesmal bei Null Volt beginnen kann. Vom Triggerzustand des dem Integrator zugehörigen Schmitt-Triggers, d.h. ob am Ausgang des Schmitt-Triggers eine positive bzw. negative Spannung ansteht, hängt es ab, ob die Abtastspannung von Null Volt ausgehend mit einer negativen bzw. positiven Steigung beginnt.

Durch die einfache Synchronisierung wird erreicht, daß zu Beginn jeder Kommutierung unabhängig von der Stromrichtung der Synchronmaschine folgendes Pulsmuster "Treiben über dem Strang, der nicht an der Kommutierung beteiligt ist, und den Strang, auf den kommutiert wird", "oberer Freilauf" bzw. "unterer Freilauf" vom Steuersatz geliefert wird. Dadurch haben alle Stromeinbrüche jeweils in dem an der Kommutierung nicht beteiligten Strang dieselbe Amplitude, die gegenüber den Stromeinbrüchen ohne Synchronisierung auch noch verringert sind.

In einem weiteren vorteilhaften Verfahrensschritt wird am Schmitt-Trigger des Pulsfrequenzgenerators während der Synchronisierzeit bei positiver Steuerspannung eine negative Spannung bzw. bei negativer Steuerspannung eine positive Spannung angelegt. Dadurch wird erreicht, daß zu Beginn jeder Kommutierung für Rechtslauf bzw. Linkslauf der Synchronmaschine folgendes Pulsmuster "Treiben über dem Strang, der an der Kommutierung nicht beteiligt ist, und den Strang, auf den kommutiert wird" und "oberer Freilauf" bzw. "unterer Freilauf" vom Steuersatz geliefert wird. Infolge dieses am Stromrichter anliegende Pulsmuster und der damit an den Strängen der Synchronmaschine anstehenden Spannungen - 1/3 des Wertes der Zwischenkreisspannung am abkommutierrenden Strang und elektromotorische Kraft EMK - läuft die Stromänderung unabhängig von der Stromrichtung der Synchronmaschine langsam ab, wodurch der unterlagerte Stromregler die Gelegenheit hat, auf die Kommutierung einwirken zu können.

Somit haben alle Stromeinbrüche jeweils in dem an der Kommutierung nicht beteiligten Strang dieselbe Amplitude, die sich gegenüber den Stromeinbrüchen mit einfacher Synchronisierung weiter verringert haben.

Bei einer vorteilhaften Schaltungsanordnung zur Durchführung des Verfahrens nach Anspruch 1 mit einer blockstromgespeisten Synchronmaschine, die mit einem Stromrichter, einem Tachogenerator, einem Rotorlagegeber, einem Drehzahlregler und einem Stromregler versehen ist, wobei der Ausgang des Stromreglers mit einem Eingang eines Steuersatzes des Stromrichters und der Ausgang des Rotorlagegebers mit einer Kommutierungserkennung verknüpft ist, erweist es sich als vorteilhaft, daß der Ausgang der Kommutierungserkennung mit einem Synchronisierglied verbunden ist, das jeweils mit Beginn einer Kommutierung einen Löschimpuls abgibt, der ein Nullsetzen der Abtastspannung im Pulsfrequenzgenerator bewirkt.

Mit dieser Schaltungsanordnung wird erreicht, daß zu Beginn jeder Kommutierung unabhängig von der Stromrichtung der Synchronmaschine die dreieckförmige, hochfrequente Abtastspannung des Pulsfrequenzgenerators immer bei Null Volt mit negativer bzw. positiver Steigung beginnt. Der Kommutierungsanfang wird aus den vorhandenen Lagesignalen mittels einer bekannten Schaltungsanordnung ermittelt. Somit erhält man eine Schaltungsanordnung, mit der man die Drehmomentwelligkeit verringern kann.

In einer vorteilhaften Schaltungsanordnung ist der Ausgang des Stromreglers mit einer Vorzeichenerkennung verbunden, dessen Ausgang mittels eines Schalters mit dem Pulsfrequenzgenerator des Steuersatzes verknüpft ist, wobei der Schalter vom Synchronisierglied betätigbar ist. Mit dieser Schaltungsanordnung wird erreicht, daß zu Beginn jeder Kommutierung unabhängig von der Stromrichtung der Synchronmaschine die dreieckförmige, hochfrequente Abtastspannung immer bei Null Volt beginnt, wobei bei einer positiven bzw. negativen Steuerspannung die Abtastspannung mit einer negativen bzw. positiven Steigung beginnt. Dadurch erzeugt der Steuersatz unabhängig von der Stromrichtung der Synchronmaschine zu Beginn jeder Kommutierung dasselbe Pulsmuster, wodurch die Stromänderung langsam abläuft, so daß der unterlagerte Stromregler auf diese Stromänderung einwirken kann. Somit erhält man eine Schaltungsanordnung, mit der man die Drehmomentwelligkeit erheblich verringern kann.

In einer weiteren vorteilhaften Schaltungsanordnung ist als Synchronisierglied ein EXNOR-Gatter vorgesehen, deren beide Eingänge mit dem Ausgang der Kommutierungserkennung verknüpft sind, wobei einem Eingang ein Zeitglied vorgeschaltet ist, und daß der Ausgang des EXNOR-Gatters auf einen Schalter einwirkt, der elektrisch parallel zu einem Kondensator eines Integrators des Pulsfrequenzgenerators geschaltet ist. Dadurch erhält man ein besonders einfach aufgebautes Synchronisierglied, wobei das Zeitglied eine Synchronisierzeit festlegt, während deren der Kondensator des Integrators des Pulsfrequenzgenerators entladen wird. Somit kann die dreieckförmige, hochfrequente Abtastspannung bei Null Volt beginnen.

In einer weiteren Schaltungsanordnung wirkt der Ausgang des EXNOR-Gatters über eine negativ flankengetriggerte monostabile Kippschaltung auf einen Schalter ein, dessen Eingang mit der Vorzeichenerkennung und dessen Ausgang mit einem Eingang eines Schmitt-Triggers des Pulsfrequenzgenerators verknüpft sind. Dadurch wird erreicht, daß in Abhängigkeit des Vorzeichens der Steuerspannung die dreieckförmige, hochfrequente Abtastspannung, nachdem sie auf Null Volt gesetzt ist, mit einer positiven bzw. negativen Steigung beginnt. Dadurch erzeugt der Steuersatz zu Beginn jeder Kommutierung dasselbe Pulsmuster, wodurch die Drehmomentwelligkeit erheblich reduziert wird.

Zur weiteren Erläuterung der Erfindung wird auf die Zeichnung Bezug genommen, in der Ausführungsbeispiele nach der Erfindung schematisch veranschaulicht sind.

| | |
|---|---|
| FIG 1 | zeigt eine Schaltungsanordnung zur Durchführung des erfindungsgemäßen Verfahrens, in |
| FIG 2 | ist eine vorteilhafte Schaltungsanordnung nach FIG 1 dargestellt, die |
| FIG 3 | zeigt ein Synchronisierglied, die |
| FIG 4 | zeigt einen Pulsfrequenzgenerator des Steuersatzes, in |
| FIG 5 | bzw. 9 ist eine Abtastspannung mit den überlagerten Steuerspannungen für die Drehrichtung "rechts motorisch" bzw. Drehrichtung "links motorisch" in einem Diagramm über der Zeit t dargestellt, in den |

FIG 6 und 7 bzw. 10 und 11 sind die pulsbreitenmodulierten Steuerspannungen in einem Diagramm über der Zeit t dargestellt, und die

FIG 8 bzw. 12 zeigen das erzeugte Pulsmuster.

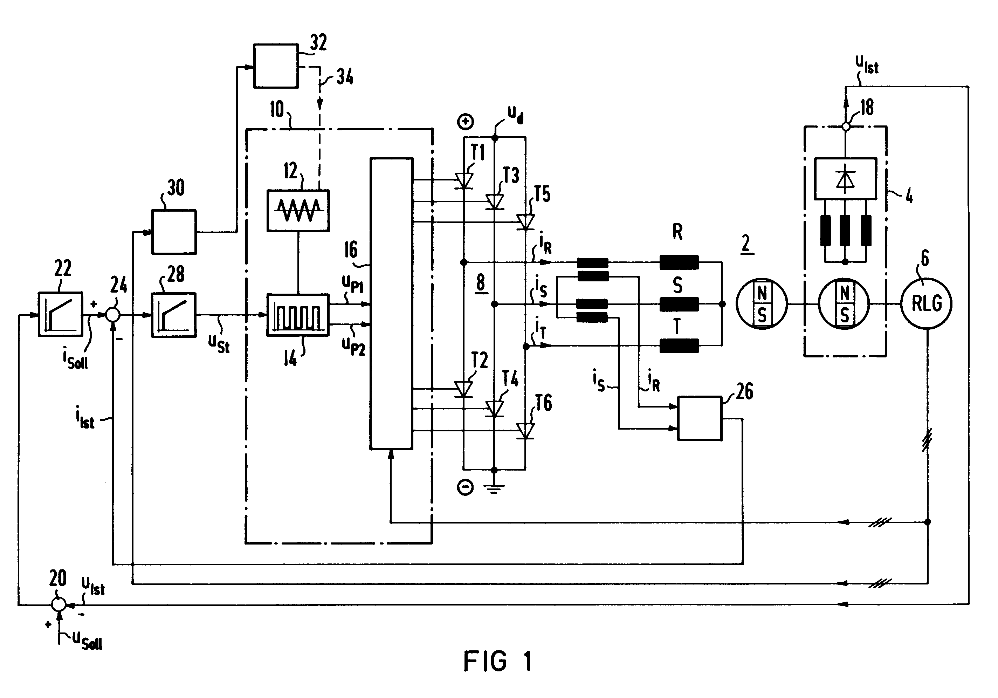

In FIG 1 ist eine Synchronmaschine 2 mit einem nachgeschalteten Tachogenerator 4 und einem Rotorlagegeber 6 veranschaulicht, wobei die Ständerstränge R, S und T der Synchronmaschine 2 mit einem Stromrichter 8 verknüpft sind. Der Stromrichter 8 ist als sechs-pulsige Brückenschaltung mit den Halbleiterventilen T1 bis T6 aufgebaut, wobei auf die Freilaufdioden aus Übersichtlichkeitsgründen verzichtet wurde. Die Zündsignale für die Halbleiterventile T1 bis T6 des Stromrichters 8 werden in Abhängigkeit einer Steuerspannung $u_{St}$ in einem Steuersatz 10 erzeugt. Dabei enthält der Steuersatz 10 einen Pulsfrequenzgenerator 12, der eine dreieckförmige, hochfrequente Abtastspannung $u_D$ liefert, einen Pulsbreitenmodulator 14 und eine Impuls-Verteillogik 16. Als Pulsfrequenzgenerator 12 können auch Generatoren vorgesehen sein, die eine Sägezahnspannung oder eine unsymmetrische Dreieckspannung als Abtastspannung liefern. Im Pulsbreitenmodulator 14 wird aus der Steuerspannung und der Abtastspannung zwei pulsbreitenmodulierte Signale $u_{P1}$ und $u_{P2}$ erzeugt, die der Impuls-Verteillogik 16 zugeführt werden. Diese impulsbreitenmodulierten Signale $u_{P1}$ und $u_{P2}$ werden dann in ein Pulsmuster gewandelt und in Abhängigkeit dieses Pulsmusters werden dann Steuersignale auf die Steuereingänge der Halbleiterventile T1 bis T6 verteilt.

Bei dieser Synchronmaschine 2 ist eine Drehzahlregelung mit unterlagerter Stromregelung vorgesehen. Die Drehzahl der Synchronmaschine 2 wird mittels des Tachogenerators 4 erfaßt, an dessen Ausgang 18 eine drehzahlproportionale Spannung $u_{Ist}$ als Drehzahl-Istwert ansteht. Dieser Drehzahl-Istwert $u_{Ist}$ wird einer Vergleichsstelle 20 mit zwei Eingängen zugeführt. am Minus-Eingang steht der Istwert $u_{Ist}$ der Drehzahl n und am Plus-Eingang steht der Sollwert $u_{Soll}$ an. Am Ausgang der Vergleichsstelle 20 steht eine Regeldifferenz bzw. eine Drehzahldifferenz an, die einem Drehzahlregler 22 zugeführt wird. Als Drehzahlregler 22 ist ein PI-Regler vorgesehen. Am Ausgang dieses Drehzahlreglers 22 kann man einen Strom-Sollwert $i_{Soll}$ abnehmen, der einer zweiten Vergleichsstelle 24 mit zwei Eingängen zugeführt wird. Am Plus-Eingang dieser Vergleichsstelle 24 steht der Strom-Sollwert $i_{Soll}$ an und dem Minus-Eingang dieser Vergleichsstelle 24 ist ein Strom-Istwert $i_{Ist}$ zugeführt. Dieser Strom-Istwert $i_{Ist}$ ist aus zwei Strangströmen $i_R$ und $i_S$ mittels einer Einrichtung 26 zur Strom-Istwertbildung gebildet worden. Eine derartige Einrichtung 26 zur Strom-Istwertbildung bei dreiphasiger Blockstromspeisung ist aus der deutschen Offenlegungsschrift DE 36 16 208 A1 bekannt. Die Regeldifferenz bzw. Stromdifferenz dieser zweiten Vergleichsstelle wird einem Stromrichter 28 zugeführt. Auch dieser Stromregler 28 ist ein PI-Regler, an dessen Ausgang die Steuerspannung $u_{St}$ für den Steuersatz 10 ansteht.

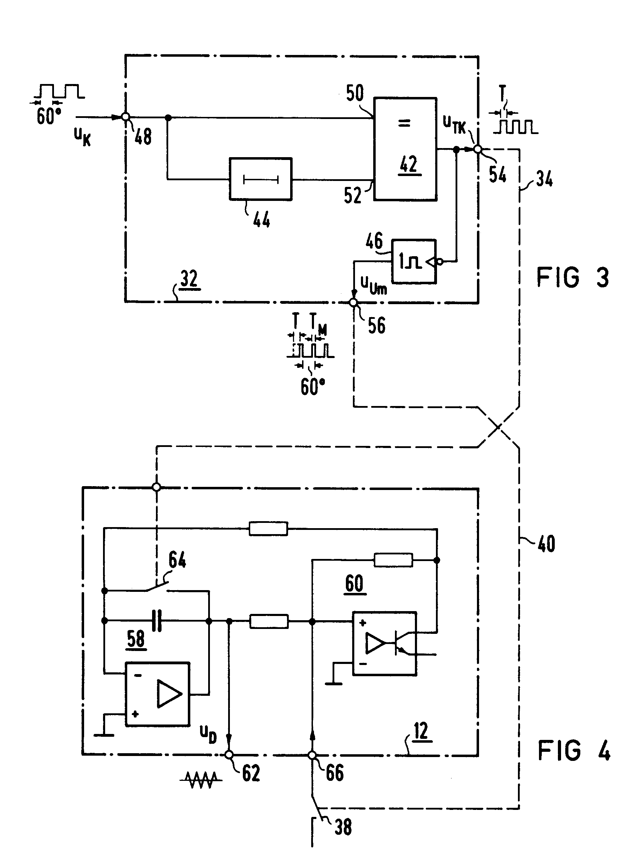

Der Rotorlagegeber 6 erzeugt drei jeweils um 120° el. gegeneinander versetzte binäre Lagesignale, die mit den Stromblöcken der Synchronmaschine 2 synchronisiert sind. Mit Hilfe dieser Lagesignale und einer Kommutierungserfassung 30, die im einfachsten Fall eine Auswerteelektronik für die Flanken der Lagesignale sein kann, wird der Kommutierungsanfang ermittelt. Der Ausgang dieser Kommutierungserfassung 30 ist mit einem Synchronisierglied 32 elektrisch verknüpft, das in FIG 3 näher beschrieben ist. Der Ausgang dieses Synchronisiergliedes 32 ist mittels einer Wirklinie 34, die als unterbrochene Linie dargestellt ist, mit dem Pulsfrequenzgenerator 12 verbunden. Dieser Pulsfrequenzgenerator 12 ist in der FIG 4 näher erläutert.

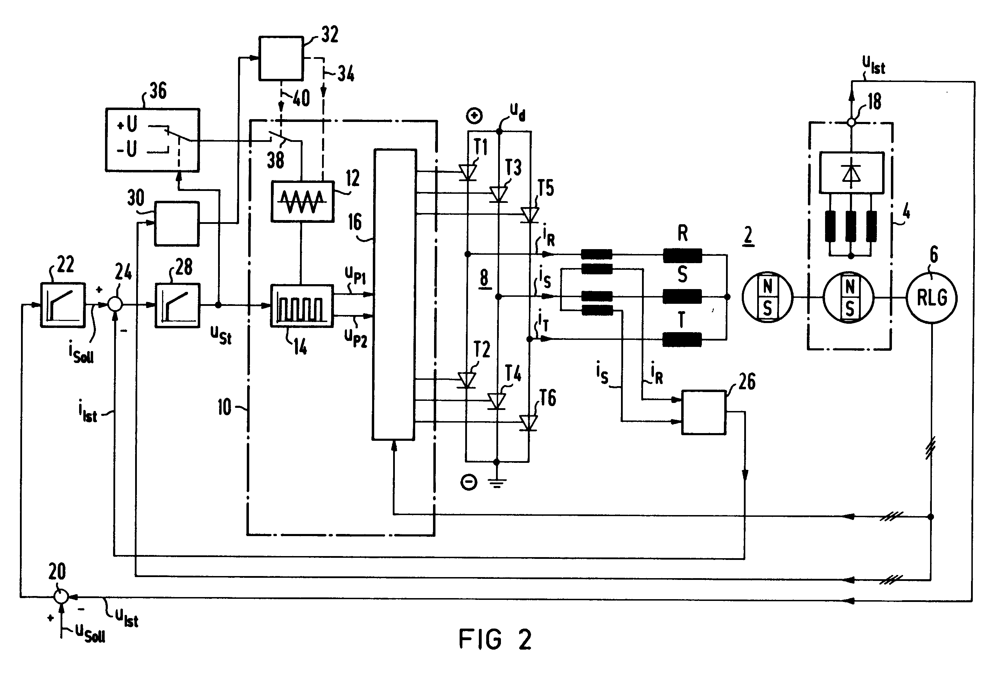

In der FIG 2 ist eine vorteilhafte Schaltungsanordnung nach FIG 1 dargestellt. Der Unterschied zwischen den zwei in FIG 1 und 2 gezeigten Ausführungsformen der Schaltungsanordnung besteht darin, daß der Ausgang des Stromreglers 28 außerdem mit einer Vorzeichenerkennung 36 verknüpft ist, an dessen Ausgang eine Spannung +U oder -U ansteht, die über einen Schalter 38 dem Pulsfrequenzgenerator 12 des Steuersatzes 10 zuführt wird. Der Schalter 38 ist mittels einer weiteren Wirklinie 40, die als unterbrochene Linie dargestellt ist, mit dem Synchronisierglied 32 verknüpft. Alle anderen Bauelemente dieser vorteilhaften Schaltungsanordnung sind identisch mit den Bauelementen der Schaltungsanordnung nach FIG 1, weshalb auch gleiche Bauelemente gleiche Bezugzeichen haben.

Die FIG 3 zeigt eine mögliche Ausführungsform des Synchronisierglieds 32. Das Synchronisierglied 32 enthält ein EXNOR-Gatter 42, ein Zeitglied 44 und eine negativ flankengetriggerte monostabile Kippschaltung 46. Am Eingang 48 des Synchronisierglieds 32 steht ein von der Kommutierungserkennung 30 erzeugtes Rechtecksignal $u_K$ an, wobei alle 60° el. der Pegel dieses Rechtecksignals $u_K$ sich ändert. Dieses Rechtecksignal $u_K$ wird einerseits direkt einem ersten Eingang 50 des EXNOR-Gatters 42 und andererseits über das Zeitglied 44 einem zweiten Eingang 52 des EXNOR-Gatters 42 zugeführt. Am Ausgang 54 des EXNOR-Gatters 42 steht ein Rechtecksignal $u_{TK}$ an, wobei alle 60° el. für eine vorbestimmte Zeit T der Pegel auf logisch "1" geht. Diese Zeit T wird auch Synchronisierzeit T genannt. Die Synchronisierzeit T ist so bemessen, daß die gesamte Ladung des Kondensators des Integrators des Pulsfrequenzgenerators 12 abfließen kann. Dieses Rechtecksignal $u_{TK}$ wird mittels der Wirklinie 34, gemäß der FIG 1 und 2, dem Pulsfrequenzgenerator 12 zugeführt. Außerdem wird das Rechtecksignal $u_{TK}$ über die negativ flankengetriggerte monostabile Kippschaltung 46 einem zweiten Ausgang 56 zugeführt. An diesem Ausgang 56 steht ein Rechtecksignal $u_{Um}$ an. Mit jeder negativen Flanke des Rechtecksignals $u_{TK}$ wird die monostabile Kippschaltung 46 gesetzt, d.h. an ihrem Ausgang erscheint eine logische "1". Nachdem eine vorbestimmte, der Kippschaltung 46 eigenen Zeit $T_M$ abgelaufen ist, erscheint am Ausgang dieser Kippschaltung 46 wieder eine logische "0". Dieses Rechtecksignal $u_{Um}$ wird mittels der Wirklinie 40, gemäß der FIG 2, dem Schalter 38 zugeführt.

In FIG 4 ist eine mögliche Ausführungsform des Pulsfrequenzgenerators 12 dargestellt. Diese Ausführungsform des Pulsfrequenzgenerators 12 ist beispielsweise aus dem Buch "Halbleiter-Schaltungstechnik" von U. Tietze, Ch. Schenk, 6. Auflage, 1983, Seiten 461 bis 469 zu entnehmen. Der Pulsfrequenzgenerator 12 enthält einen Integrator 58 mit nachgeschaltetem Schmitt-Trigger 60. Am Ausgang 62 des Integrators 58 steht eine dreieckförmige, hochfrequente Abtastspannung $u_D$ zur Verfügung. Dem Kondensator des Integrators 58 ist ein Schalter 64 elektrisch parallel geschaltet, der über die Wirklinie 34 vom Synchronisierglied 32 betätigbar ist. Sobald der Schalter 64 geschlossen ist, entlädt sich der elektrisch parallel geschaltete Kondensator und die Abtastspannung am Ausgang 62 beginnt bei Null Volt mit positiver bzw. negativer Steigung in Abhängigkeit der Ausgangsspannung des Schmitt-Triggers 60. Wenn beispielsweise der Schalter 64 während eines Abintegrierens geschlossen wird, so steht am Ausgang des Schmitt-Triggers 60 eine positive Spannung an, solange der Ausschaltpegel nicht erreicht ist, wodurch die Abtastspannung nach dem Öffnen des Schalters 64 von Null Volt aus mit einer negativen Steigung beginnt.

Damit es nicht dem Zufall überlassen bleibt, mit welcher Steigung die Abtastspannung von Null Volt aus beginnt, nachdem der Kondensator des Integrators 58 entladen ist, wird über einen Eingang 66 eine positive bzw. negative Spannung +U bzw. -U zugeführt. Dabei sind die Amplituden dieser Spannungen +U und -U gleich und entsprechen den Amplituden des Einschalt- bzw. Ausschaltpegels des Schmitt-Triggers 60. Diese Spannungen +U und -U werden erst dem Schmitt-Trigger 60 zugeführt, wenn der Schalter 64 wieder geschlossen ist. Dadurch erhält der Schmitt-Trigger 60 einen Einschalt- bzw. Ausschaltpegel und die Abtastspannung $u_D$ beginnt von Null Volt aus mit einer negativen bzw. positiven Steigung, sobald der Schalter 64 geöffnet ist. Die Spannungen +U und -U werden von der Vorzeichenerkennung 36 in Abhängigkeit der Polarität der Steuerspannung $u_{St}$ erzeugt und über den Schalter 38 dem Eingang 66 des Schmitt-Triggers 60 zugeführt. Der Schalter 38 ist mittels der Wirklinie 40 vom Synchronisierglied 32 steuerbar. Somit wird erreicht, daß bei positivem Vorzeichen der Steuerspannung $u_{St}$ die Spannung +U von der Vorzeichenerkennung 36 über den Schalter 38 dem Pulsfrequenzgenerator 12 zugeführt wird, damit die Abtastspannung $u_D$ zu jedem Kommutierungsbeginn von Null Volt aus mit einer negativen Steigung beginnt. Bei negativem Vorzeichen der Steuerspannung $u_{St}$ wird die Spannung -U von der Vorzeichenerkennung 36 über den Schalter 38 dem Pulsfrequenzgenerator 12 zugeführt, damit die Abtastspannung $u_D$ zu jedem Kommutierungsbeginn von Null Volt aus mit einer positiven Steigung beginnt.

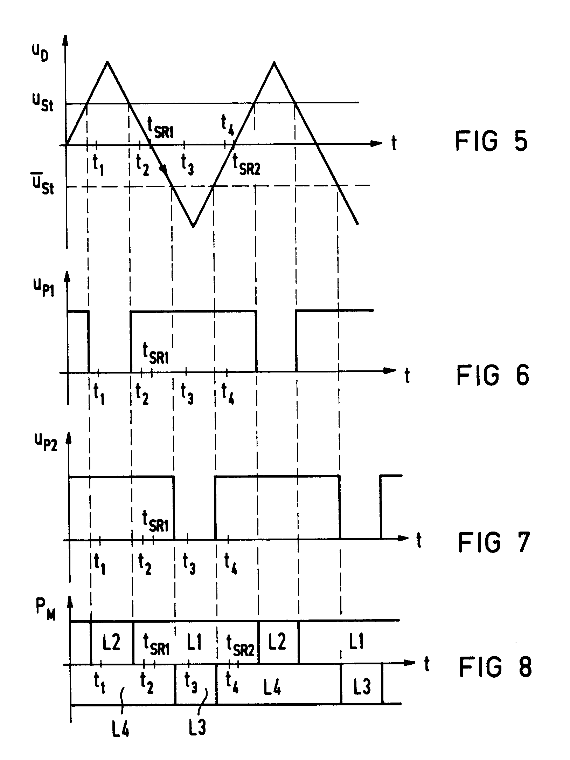

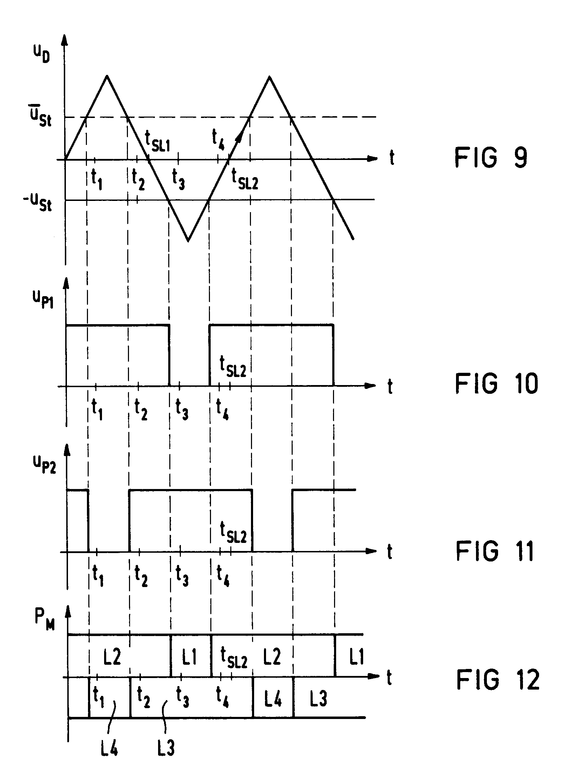

Anhand der FIG 5 bis 8 bzw. den FIG 9 bis 12 wird das Verfahren zur Verringerung eines Stromeinbruches in einem nicht an der Kommutierung beteiligten Stranges R bzw. S bzw. T für den Rechtslauf bzw. Linkslauf der Synchronmaschine 2 näher erläutert. Dabei fließt der Strom vor der Kommutierung über die Stränge R und S und nach der Kommutierung über die Stränge R und T. Bezogen auf eine Periode der Abtastspannung $u_D$ kann zu dem Zeitpunkt $t_1$ bis $t_4$ jedesmal die Kommutierung beginnen. Dadurch ergeben sich drei verschiedene Pulsmuster gemäß der FIG 8 bzw. der FIG 12. Außerdem stehen dann an dem abkommutierenden Strang S unterschiedliche Spannungen an, die den Stromabbau im abkommutierenden Strang S antreiben. In der Tabelle 1 sind zu den einzelnen Zeiten $t_1$ bis $t_4$ die zugehörigen Pulsmuster, der physikalische Stromverlauf und die am abkommutierenden Strang S anstehende, treibende Spannung für die Fälle "Rechtslauf, Stromfluß über Strang R und S" und "Rechtslauf, Stromfluß über Strang R, S und T" dargestellt. Dabei bedeutet das Zeichen + bzw. - , daß der entsprechende Strang der Synchronmaschine 2 mit der Plus-Stromschiene bzw. mit der Minus-Stromschiene des Zwischenkreises des Stromrichters 8 verknüpft ist, wobei der Zwischenkreis aus Übersichtlichkeitsgründen nicht in den FIG 1 und 2 dargestellt ist, sondern es sind nur die Zeichen + und - am Stromrichter 8 angetragen.

| Zeit | | Rechtslauf ≙ +uSt Stromfluß über R und S vor der Kommutierung | | Rechtslauf ≙ +uSt Stromfluß über R,S und T während der Kommutierung | treibende Spannung am Strang S |
|---|---|---|---|---|---|
| $t_1$ | L2,L4 | unterer Freilauf: R und S an ⊖ Zwischenkreis | L2,L4 | unterer Freilauf: R und T ⊖ Zwischenkreis S ⊕ Zwischenkreis | 2/3 $U_d$ |
| $t_2$ | L1,L4 | Stromaufbau: R ⊕ Zwischenkreis S ⊖ Zwischenkreis | L1,L4 | Stromaufbau: R und S ⊕ Zwischenkreis T ⊖ Zwischenkreis | 1/3 $U_d$ |
| $t_3$ | L1,L3 | oberer Freilauf: R,S ⊕ Zwischenkreis | L1,L3 | oberer Freilauf: R,S u.T ⊕ Zwischenkreis | EMK |
| $t_4$ | L1,L4 | Stromaufbau: R ⊕ Zwischenkreis S ⊖ Zwischenkreis | L1,L4 | Stromaufbau: R und S ⊕ Zwischenkreis T ⊖ Zwischenkreis | 1/3 $U_d$ |
| $t_{SR1}$ | L1,L4 | Stromaufbau: R ⊕ Zwischenkreis S ⊖ Zwischenkreis | L1,L4 | Stromaufbau: R und S ⊕ Zwischenkreis T ⊖ Zwischenkreis | 1/3 $U_d$ |
| $t_{SR2}$ | L1,L4 | Stromaufbau: R ⊕ Zwischenkreis S ⊖ Zwischenkreis | L1,L4 | Stromaufbau: R und S ⊕ Zwischenkreis T ⊖ Zwischenkreis | 1/3 $U_d$ |

Tabelle 1

In der Tabelle 2 sind zu den einzelnen Zeiten $t_1$ bis $t_4$ die Pulsmuster, der physikalische Stromverlauf und die am abkommutierenden Strang S anstehende, treibende Spannung für die Fälle "Linkslauf, Stromfluß über Strang R und S" und "Linkslauf, Stromfluß über Strang R, S und T" dargestellt. Dabei bedeutet das Zeichen ⊕ bzw. ⊖, daß der entsprechende Strang der Synchronmaschine 2 mit der Plus-Stromschiene bzw. mit der Minus-Stromschiene des Zwischenkreises des Stromrichters 8 verknüpft ist, wobei der Zwischenkreis aus Übersichtlichkeitsgründen nicht in den FIG 1 und 2 dargestellt ist, sondern es sind nur die Zeichen ⊕ und ⊖ am Stromrichter 8 angetragen.

6

| | Linkslauf ≙ $-u_{St}$<br>Stromfluß über R und S vor der Kommutierung | | Linkslauf ≙ $-u_{St}$<br>Stromfluß über R,S und T während der Kommutierung | | treibende Spannung am Strang S |
|---|---|---|---|---|---|
| $t_1$ | unterer Freilauf:<br>R und S an ⊖ Zwischenkreis | L2,L4 | unterer Freilauf:<br>R,S u.T ⊖ Zwischenkreis | L2,L4 | EMK |
| $t_2$ | Stromaufbau:<br>R ⊖ Zwischenkreis<br>S ⊕ Zwischenkreis | L2,L3 | Stromaufbau:<br>R und S ⊖ Zwischenkreis<br>T ⊕ Zwischenkreis | L2,L3 | $1/3\ U_d$ |
| $t_3$ | oberer Freilauf:<br>R,S ⊕ Zwischenkreis | L1,L3 | oberer Freilauf:<br>R und T ⊕ Zwischenkreis<br>S ⊖ Zwischenkreis | L1,L3 | $2/3\ U_d$ |
| $t_4$ | Stromaufbau:<br>R ⊖ Zwischenkreis<br>S ⊕ Zwischenkreis | L2,L3 | Stromaufbau:<br>R und S ⊖ Zwischenkreis<br>T ⊕ Zwischenkreis | L2,L3 | $1/3\ U_d$ |
| $t_{SR1}$ | Stromaufbau:<br>R ⊖ Zwischenkreis<br>S ⊕ Zwischenkreis | L2,L3 | Stromaufbau:<br>R und S ⊖ Zwischenkreis<br>T ⊕ Zwischenkreis | L2,L3 | $1/3\ U_d$ |
| $t_{SR2}$ | Stromaufbau:<br>R ⊖ Zwischenkreis<br>S ⊕ Zwischenkreis | L2,L3 | Stromaufbau:<br>R und S ⊖ Zwischenkreis<br>T ⊕ Zwischenkreis | L2,L3 | $1/3\ U_d$ |

Tabelle 2

Außerdem ist in der Tabelle 1 bzw. 2 jeweils das Pulsmuster, der physikalische Stromverlauf und die am abkommutierenden Strang S anstehende, treibende Spannung zum Synchronisierungszeitpunkt $t_{SR1}$ und $t_{SR2}$ bzw. $t_{SL1}$ und $t_{SL2}$ angegeben.

Zu den einzelnen Pulsmustern gemäß FIG 8 bzw. 12 gelangt man in folgender Weise: Bei Rechtslauf bzw. Linkslauf ist die Steuerspannung $u_{St}$ des Stromreglers 28 positiv bzw. negativ. Aus dieser Steuerspannung wird eine zweite inverse Steuerspannung $\overline{u_{St}}$ erzeugt und beide Steuerspannungen $+u_{St}$ und $\overline{u_{St}}$ bzw. $-u_{St}$ und $\overline{u_{St}}$ werden mit der Abtastspannung $u_D$ des Pulsfrequenzgenerators 12 im Pulsbreitenmodulator 14 verglichen. An den Ausgängen des Pulsbreitenmodulators 14 stehen dann die pulsbreitenmodulierten Rechtecksignale $u_{P1}$ und $u_{P2}$ gemäß den FIG 6 und 7 bzw. den FIG 10 und 11 an. Die Impuls-Verteillogik 16 erzeugt in Abhängigkeit der binären Lagesignale des Rotorlagegebers 6 das Pulsmuster gemäß FIG 8 bzw. 12 an den beiden stromführenden Strängen.

Der Tabelle 1 bzw. 2 entnimmt man, daß die am abkommutierenden Strang S anstehende, treibende Spannung schwankt. Dementsprechend kommutiert der Strom im Strang S unterschiedlich schnell ab bzw. kommutiert der Strom im Strang T unterschiedlich schnell auf. Dadurch entstehen bei jeder Kommutierung auf dem an der Kommutierung nicht beteiligten Strang R Stromeinbrüche bzw. Stromspitzen, die unterschiedliche Amplituden aufweisen.

Durch ein einfaches Synchronisierverfahren der Abtastspannung $u_D$, dessen Schaltungsanordnung in FIG 1 dargestellt ist, wird erreicht, daß die Abtastspannung $u_D$ zu jedem Kommutierungsbeginn bei Null Volt mit einer positiven bzw. negativen Steigung beginnt. D.h. nach FIG 5 in Verbindung mit der Tabelle 1 erzeugt die Impuls-Verteillogik 16 zum Zeitpunkt $t_{SR1}$ das Pulsmuster L1, L4 und zum Zeitpunkt $t_{SR2}$ das Pulsmuster L1, L4. Beide Pulsmuster sind beim Kommutierungsbeginn gleich, jedoch schon jeweils das sich daran anschließende Pulsmuster ist unterschiedlich.

Dem Pulsmuster L1, L4 vom Zeitpunkt $t_{SR1}$ schließt sich das Pulsmuster L1, L3 an, d.h. nach Stromaufbau über die Thyristoren T1, T6 folgt ein Stromabbau über den oberen Freilauf über die Thyristoren T1, T5, wobei als treibende Spannung nur die elektromotorische Kraft EMK der Synchronmaschine 2 an den Strängen ansteht. Dem Pulsmuster L1, L4 zum Zeitpunkt $t_{SR2}$ schließt sich das Pulsmuster L2, L4 an, d.h. nach Stromaufbau über die Thyristoren T1, T6 folgt Stromabbau über unteren Freilauf über die Thyristoren T2, T6, wobei als treibende Spannung am abkommutierenden Strang S 2/3 des Wertes der Zwischenkreisspannung $U_d$ ansteht. Daraus folgt, daß wenn zum Synchronisierzeitpunkt $t_{SR2}$ die Kommutierung beginnt, der Strom im Strang S schneller abkommutiert gegenüber einer Kommutierung zum Synchronisierzeitpunkt $t_{SR1}$. Dadurch entsteht auf dem an der Kommutierung nicht beteiligten Strang R unterschiedliche Stromeinbrüche, die aber zu jedem Kommutierungsbeginn die gleiche Amplitude aufweisen und somit die Welligkeit des Gesamtstromes bzw. des Drehmomentes über mehrere Perioden der Klemmspannung der Synchronmaschine 2 verringern.

Durch das ausgewählte Synchronisierverfahren der Abtastspannung $u_D$, dessen Schaltungsanordnung in FIG 2 dargestellt ist, wird erreicht, daß bei Rechtslauf der Synchronmaschine 2 zum Zeitpunkt $t_{SR1}$ und bei Linkslauf der Synchronmaschine 2 zum Zeitpunkt $t_{SL2}$ die Abtastspannung $u_D$ synchronisiert wird. Daraus folgt, daß sowohl beim Rechtslauf als auch beim Linkslauf sich die gleichen Pulsmuster fortlaufend von dem Synchronisierzeitpunkt $t_{SR1}$ bzw. $t_{SL2}$ aneinanderreihen.

Man beginnt mit dem Kommutierungsbeginn mit dem Pulsmuster "Stromaufbau über die Thyristoren T1, T6 bzw. T2, T5". Dem schließt sich das Pulsmuster "Stromabbau über oberen Freilauf über Thyristoren T1, T5 mit der treibenden Spannung EMK" bzw. "Stromabbau über unteren Freilauf über Thyristoren T2, T6 mit der treibenden Spannung EMK" und dem schließt sich wieder das Pulsmuster "Stromaufbau über die Thyristoren T1, T6 bzw. T2, T5" an. Dadurch werden alle Kommutierungen einheitlich. Außerdem läuft die Stromänderung langsam ab, da nur die EMK als treibende Spannung an den Strängen R, S und T ansteht, wodurch der unterlagerte Stromregler 28 Gelegenheit erhält, auf die Kommutierung einwirken zu können. Somit werden die Stromeinbrüche auf den an der Kommutierung nicht beteiligten Strang R bzw. S bzw. T alle gleich und verringert sich gegenüber den mittels der einfachen Synchronisierung reduzierten Amplituden nochmals, wodurch die Welligkeit des Gesamtstromes bzw. des Drehmoments erheblich reduziert wird.

**Patentansprüche**

1. Verfahren zur Verringerung eines Stromeinbruches in einem nicht an einer Kommutierung beteiligten Strang (R) einer dreiphasigen, blockstromgespeisten Synchronmaschine (2), während die Strangströme ($i_S, i_T$) kommutieren, wobei ein Pulsfrequenzgenerator (12) eine dreieckförmige, hochfrequente Abtastspannung ($u_D$) liefert und diese Abtastspannung mit einer als Gleichspannung vorliegenden Steuerspannung ($u_{St}$) durch Vergleich in einem Pulsbreitenmodulator (14) ein pulsbreitenmoduliertes Signal ($u_{P1}, u_{P2}$) liefern, das zum Ansteuern des Steuersatzes (10) eines die Synchronmaschine (2) speisenden Stromrichter (8) dient, und wobei jeweils zum Kommutierungsbeginn für eine vorbestimmte Synchronisierzeit (T) die hochfrequente Abtastspannung ($u_D$) auf Null gesetzt wird.

2. Verfahren nach Anspruch 1, **dadurch gekennzeichnet,** daß am Schmidt-Trigger (60) des Pulsfrequenzgenerators (12) während der Synchronisierzeit (T) bei positiver Steuerspannung ($u_{St}$) eine negative Spannung (-U) bzw. bei negativer Steuerspannung ($-u_{St}$) eine positive Spannung (+U) angelegt wird.

3. Schaltungsanordnung zur Durchführung des Verfahrens nach Anspruch 1 mit einer blockstromgespeisten Synchronmaschine (2), die mit einem Stromrichter (8), einem Tachogenerator (4), einem Rotorlagegeber (6), einem Drehzahlregler (22) und einem Stromregler (28) versehen ist, wobei der Ausgang des Stromreglers (2) mit einem Eingang eines Steuersatzes (10) des Stromrichters (8) und der Ausgang des Rotorlagegebers (6) mit einer Kommutierungserkennung (30) verknüpft sind, daß der Ausgang der Kommutierungserkennung (30) mit einem Synchronisierglied (32) verbunden ist, das jeweils mit Beginn einer Kommutierung einen Löschimpuls abgibt, der ein Nullsetzen der hochfrequen-

EP 0 350 716 B1

ten Abtastspannung ($u_D$) im Pulsfrequenzgenerator (12) bewirkt.

4. Schaltungsanordnung nach Anspruch 3, **dadurch gekennzeichnet,** daß der Ausgang des Stromreglers (28) mit einer Vorzeichenerkennung (36) verbunden ist, dessen Ausgang mittels eines Schalters (38) mit dem Pulsfrequenzgenerator des Steuersatzes (10) verknüpft ist, wobei der Schalter (38) vom Sychronisierglied (32) betätigbar ist.

5. Schaltungsanordnung nach Anspruch 3, **dadurch gekennzeichnet,** daß als Synchronisierglied (32) ein EXNOR-Gatter (42) vorgesehen ist, deren beide Eingänge (50, 52) mit dem Ausgang der Kommutierungserkennung (30) verknüpft sind, wobei einem Eingang (52) ein Zeitglied (44) vorgeschaltet ist, und daß der Ausgang (54) des EXNOR-Gatters (42) auf einen Schalter (64) einwirkt, der elektrisch parallel zu einem Kondensator eines Integrators (58) des Pulsfrequenzgenerators (12) geschaltet ist.

6. Schaltungsanordnung nach Anspruch 4 und 5, **dadurchg ekennzeichnet,** daß der Ausgang des EXNOR-Gatters (42) über eine negativ flankengetriggerte monostabile Kippschaltung (46) auf einen Schalter (38) einwirkt, dessen Eingang mit der Vorzeichenerkennung (36) und dessen Ausgang mit einem Eingang (66) eines Schmitt-Triggers (60) des Pulsfrequenzgenerators (12) verknüpft sind.

**Claims**

1. Method for reducing a current break in a leg (R) of a three-phase, block current-fed synchronous machine (2) that is not participating in a commutation, whilst the leg currents ($i_S$, $i_T$) are commutating, in which case a pulse frequency generator (12) supplies a triangular, high-frequency sampling voltage ($u_D$) and this sampling voltage, with a control voltage ($u_{St}$) present as a direct voltage, by means of comparison in a pulse-width modulator (14), supplies a pulse width-modulated signal ($u_{P1}$, $u_{P2}$) which is used to activate the control unit (10) of a power converter (8) feeding the synchronous machine (2) and at the beginning of each commutation for a predetermined synchronizing time (T) the high-frequency sampling voltage ($u_D$) is set at zero.

2. Method according to claim 1, characterised in that with positive control voltage ($u_{St}$) a negative voltage (-U) and with negative control voltage (-$u_{St}$) a positive voltage (+U) is applied at the Schmitt-trigger (60) of the pulse frequency generator (12) during the synchronizing time (T).

3. Circuit arrangement for carrying out the method according to claim 1 with a block current-fed synchronous machine (2), which is provided with a power converter (8), a tacho-generator (4), a rotor position sensor (6), a speed regulator (22) and a current regulator (28), in which the output of the current regulator (2) (sic) is linked with an input of a control unit (10) of the power converter (8) and the output of the rotor position sensor (6) is linked with a commutation recognition unit (30), whereby the output of the commutation recognition unit (30) is connected with a synchronization element (32) which at the beginning of each commutation emits a clear pulse which effects a setting to zero of the high-frequency sampling voltage ($u_D$) in the pulse frequency generator (12).

4. Circuit arrangement according to claim 3, characterised in that the output of the current regulator (28) is connected with a sign recognition unit (36), the output of which is linked by means of a switch (38) with the pulse frequency generator of the control unit (10), with it being possible to actuate the switch (38) by the synchronization element (32).

5. Circuit arrangement according to claim 3, characterised in that an EXNOR gate (42) is provided as synchronization element (32), the two inputs (50, 52) of which are linked with the output of the commutation recognition unit (30), with a timing element (44) being connected ahead of one input (52), and in that the output (54) of the EXNOR gate (42) acts on a switch (64) which is connected electrically in parallel with a capacitor of an integrator (58) of the pulse frequency generator (12).

6. Circuit arrangement according to claim 4 and 5, characterised in that the output of the EXNOR gate (42) acts by way of a negatively edge-triggered monostable multivibrator (46) on a switch (38), the input of which is linked with the sign recognition unit (36) and the output of which is linked with an input (66) of a Schmitt-trigger (60) of the pulse frequency generator (12).

9

**Revendications**

1. Procédé pour réduire une chute du courant dans une phase (R), qui ne participe pas à une commutation, d'une machine synchrone triphasée (2) alimentée par un courant pulsionnel, tandis que les courants de phase ($i_S$, $i_T$) commutent, selon lequel un générateur de fréquences d'impulsions (12) délivre une tension d'échantillonnage triangulaire à haute fréquence ($U_D$) et cette tension d'échantillonnage et une tension de commande ($u_{St}$) présente sous la forme d'une tension continue fournissent, par comparaison dans un modulateur d'impulsions en durée (14), un signal ($u_{P1}$, $u_{P2}$) modulé selon une modulation d'impulsions en durée et qui sert à commander l'unité de commande (10) d'un convertisseur statique (8) alimentant la machine synchrone (2), et selon lequel la tension d'échantillonnage à haute fréquence ($u_D$) est réglée à une valeur nulle respectivement au début de la commutation pour une durée prédéterminée de synchronisation (T).

2. Procédé suivant la revendication 1, caractérisé par le fait qu'une tension négative (-U) est appliquée au déclencheur de Schmidt (60) du générateur de fréquences d'impulsions (12) pendant la durée de synchronisation (T) dans le cas d'une tension de commande ($u_{St}$) positive, tandis qu'une tension positive ( + U) est appliquée au déclencheur dans le cas d'une tension de commande négative (-$u_{St}$).

3. Montage pour la mise en oeuvre du procédé suivant la revendication 1 comportant une machine synchrone (2) alimentée par un courant impulsionnel et qui est équipée d'un convertisseur statique (8), d'un générateur tachymétrique (4), d'un capteur (6) de la position du rotor, d'un capteur (22) de la vitesse de rotation et d'un régulateur de courant (28), et dans lequel la sortie du régulateur de courant (2) est connectée à une entrée d'un circuit de commande (10) du convertisseur statique (8), tandis que la sortie du capteur (6) de la position du rotor est connectée à un circuit d'identification de commutation (30), et dans lequel la sortie du dispositif d'identification de commutation (30) est raccordée à un circuit de synchronisation (32) qui, respectivement au début d'une commutation, délivre une impulsion d'effacement qui provoque l'annulation de la tension d'échantillonnage à haute fréquence ($u_D$) dans le générateur de fréquences d'impulsions (12).

4. Montage suivant la revendication 3, caractérisé par le fait que la sortie du régulateur de courant (28) est raccordée à un circuit (36) d'identification du signe, dont la sortie est connectée au moyen d'un interrupteur (38) au générateur de fréquences d'impulsions de l'unité de commande (10), l'interrupteur (38) pouvant être actionné par le circuit de synchronisation (32).

5. Montage suivant la revendication 3, caractérisé par le fait qu'il est prévu comme circuit de synchronisation (32) une porte NON-OU-EXCLUSIF (42), dont les deux entrées (50, 52) sont connectées à la sortie du circuit d'identification de commutation (30), un circuit de temporisation (44) étant branché en amont d'une entrée (52), et que la sortie (54) de la porte NON-OU-EXCLUSIF (42) agit sur un interrupteur (64) qui est branché électriquement en parallèle avec un condensateur d'un intégrateur (58) du générateur de fréquences d'impulsions (12).

6. Montage suivant les revendications 4 et 5, caractérisé par le fait que la sortie de la porte NON-OU-EXCLUSIF (42) agit, par l'intermédiaire d'un circuit à bascule monostable (46) déclenché par les flancs négatifs des impulsions, sur un interrupteur (38), dont l'entrée est connectée au circuit (36) d'identification du signe et dont la sortie est connectée à une entrée (66) d'un déclencheur de Schmidt (60) du générateur de fréquences d'impulsions (12).

FIG 1

EP 0 350 716 B1

FIG 2

EP 0 350 716 B1

FIG 3

FIG 4

EP 0 350 716 B1

FIG 5

FIG 6

FIG 7

FIG 8

14

FIG 9

FIG 10

FIG 11

FIG 12